# FASCICULE DE BREVET EUROPEEN

(11) **EP 0 901 946 B1**
(45) Date de publication et mention de la délivrance du brevet: **04.12.2002**
(21) Numéro de dépôt: 98402217.8
(22) Date de dépôt: 09.09.1998
(51) Int. Cl.: B60R 21/26

(54) **Générateur pyrotechnique adaptatif de gaz pour coussin de protection avec dispositif de neutralisation**
Anpassungsfähiger, pyrotechnischer Gasgenerator für ein Luftkissen, mit Neutralisierungseinrichtung
Adaptable pyrotechnic gasgenerator for a safety bag with neutralisation device

(30) Priorité: 12.09.1997 FR 9711352
(43) Date de publication de la demande: 17.03.1999
(73) Titulaire: LIVBAG S.N.C., 91710 Vert Le Petit (FR)
(72) Inventeur: Perotto, Christian, 91610 Ballancourt (FR)
(74) Mandataire: Pech, Bernard

(56) Documents cités:
- EP-A- 0 733 519
- DE-U- 29 708 380
- US-A- 5 219 178

## Description

L'invention se rapporte au domaine de la sécurité automobile et concerne plus particulièrement des générateurs pyrotechniques adaptatifs de gaz pour gonfler des coussins de protection.

De nouveaux générateurs, dits "adaptatifs", sont apparus depuis peu afin de limiter les risques d'accidents corporels occasionnés par le déploiement du coussin dans des conditions exceptionnelles. Ces générateurs, associés à des systèmes de détection idoines, permettent de limiter le volume de gaz généré ou de moduler le débit de gaz en fonction de différents paramètres comme par exemple la température ambiante, la nature et l'intensité du choc, la morphologie et le positionnement du passager. Ces générateurs comportent généralement deux chambres de combustion séparées par une paroi étanche contenant chacune un chargement pyrotechnique et un système électrique d'allumage. Ainsi, selon les circonstances de l'accident, il est possible, soit d'initier les deux systèmes électriques d'allumage simultanément ou successivement afin de gonfler totalement le coussin de protection, une mise à feu décalée permettant de moduler la vitesse de gonflage du coussin, soit de n'initier qu'un seul système électrique d'allumage et donc de ne libérer qu'un volume de gaz limité. La demande de brevet européen EP 0 733 519 décrit justement un tel type de générateur, la paroi étanche placée entre les deux chambres de combustion étant par ailleurs munie d'une zone frangible qui, compte tenu de son mode de réalisation, peut être fracturée par les gaz générés par l'une des deux chambres de combustion mais pas par les gaz générés par l'autre chambre de combustion. Dans ce dernier cas, il reste encore, après le déploiement du coussin de protection, un chargement pyrotechnique non utilisé à l'intérieur du générateur. Or, il serait souhaitable, par souci de sécurité, d'obtenir la disparition totale de tout chargement pyrotechnique à la fin du fonctionnement du générateur adaptatif, seule la non activation de l'un des deux systèmes électriques d'allumage étant tolérée.

Jusqu'à présent, une voie connue d'initiation du chargement pyrotechnique non utile est celle se basant sur le passage, d'une chambre de combustion à l'autre, d'une petite partie des gaz de combustion du chargement pyrotechnique utile, au moyen de fuites créées volontairement dans la paroi séparatrice des deux chambres. Mais, la fiabilité et la maîtrise d'un tel système ne sont cependant pas acquises.

Certains brevets, comme par exemple le brevet US 4 998 751, décrivent des générateurs comportant deux chargements pyrotechniques distincts séparés par une paroi étanche et mis à feu par un tube allumeur qui s'étend de part et d'autre de ladite paroi étanche. Mais, ces générateurs, qui ne laissent effectivement aucune matière pyrotechnique active après fonctionnement, ne sont pas "adaptatifs". En effet, ces générateurs peuvent plutôt être qualifiés de "générateurs progressifs" puisqu'ils n'offrent qu'un seul mode de fonctionnement se traduisant par une modulation de la vitesse de gonflage du coussin de protection, et cela sans tenir compte des circonstances de l'accident.

L'homme du métier est donc à la recherche d'un générateur pyrotechnique adaptatif de gaz fiable permettant, sans altérer les possibilités de fonctionnement offertes et les performances attendues d'un tel générateur adaptatif, d'assurer, après fonctionnement, l'élimination de toute matière pyrotechnique active à l'intérieur dudit générateur.

L'invention se propose donc de répondre à ce besoin et concerne un générateur pyrotechnique adaptatif de gaz destiné à gonfler un coussin de protection utilisable en sécurité automobile comprenant un corps contenant au moins deux chambres de combustion séparées l'une de l'autre par une cloison étanche, chacune de ces deux chambres de combustion possédant au moins un chargement pyrotechnique, un système d'allumage indépendant et étant munie de tuyères d'éjection des gaz initialement obturées, caractérisé en ce que le générateur comporte un dispositif de neutralisation apte, après le gonflage opérationnel du coussin de protection du fait de l'activation de l'une des deux chambres de combustion, à provoquer l'initiation en combustion du chargement pyrotechnique non utilisé contenu dans l'autre chambre de combustion, ce dispositif de neutralisation comportant un moyen de mise en communication des deux chambres de combustion et un moyen d'initiation du chargement pyrotechnique non utilisé, ces deux moyens étant déclenchés par la mise à feu du chargement pyrotechnique contenu dans la chambre de combustion activée.

Ainsi, ce générateur pyrotechnique adaptatif de gaz permet de protéger efficacement le passager lors d'un accident tout en assurant l'élimination des deux chargements pyrotechniques.

En effet :
- Dans le cas où le coussin doit être totalement gonflé dans une durée de l'ordre de 50 millisecondes, ce qui constitue une durée normale de fonctionnement d'un générateur, les deux systèmes d'allumage sont initiés simultanément ou successivement et provoquent la mise à feu des deux chargements pyrotechniques. Il en découle alors que le dispositif de neutralisation des chargements pyrotechniques, dans cette configuration, ne produit aucun effet.
- Dans le cas où une protection efficace du passager ne nécessite qu'un gonflage partiel du coussin dans ce même laps de temps, un seul des deux systèmes d'allumage, au choix, est allumé. Le chargement pyrotechnique qui lui est associé est alors mis à feu et permet, à la fois, de générer des gaz de combustion qui gonflent le coussin un temps voulu, et de déclencher le dispositif de neutralisation des chargements pyrotechniques. Alors, au terme d'au moins 50 millisecondes, le moyen de mise en communication et le moyen d'initiation dudit dispositif provoquent la mise à feu du chargement pyrotechnique non utile contenu dans la seconde chambre de combustion. Les gaz générés s'échappent alors, d'une part, par les tuyères logées dans la seconde chambre de combustion, et d'autre part, par le moyen de mise en communication des deux chambres de combustion, et finalement par les tuyères logées dans la première chambre de combustion. Du fait de l'augmentation du nombre de tuyères par lesquelles les gaz générés par le chargement pyrotechnique non utile peuvent s'écouler, il règne une pression relativement faible à l'intérieur du générateur, ce qui se traduit par un allongement de la durée de combustion dudit chargement pyrotechnique non utile. Cela confère ainsi au générateur un débit massique faible des gaz de combustion générés par le chargement pyrotechnique non utile, et donc un comportement non agressif.

Préférentiellement, le moyen de mise en communication est constitué par au moins un tube retard muni de deux extrémités fermées et qui est fixé dans la cloison étanche de manière à ce que chacune des deux chambres de combustion contienne l'une de ces deux extrémités, et le moyen d'initiation est constitué par un mélange pyrotechnique contenu dans le tube retard, la durée de combustion dudit mélange pyrotechnique lorsque le tube retard n'est initié que par l'une de ses deux extrémités étant supérieure à la durée nécessaire au gonflage opérationnel du coussin de protection.

Préférentiellement, le mélange pyrotechnique comporte une composition pyrotechnique relais essentiellement constituée d'un mélange oxydo-réducteur. Avantageusement, la charge oxydante pourra par exemple être constituée par du perchlorate de potassium, ou par du nitrate de potassium, ou de l'oxyde de cuivre, ou encore du chromate de plomb, et la charge réductrice pourra notamment être constituée par de l'aluminium, ou du bore, ou du zirconium, ou encore du titane. Avantageusement, la combustion du mélange pyrotechnique ne génère essentiellement que des produits gazeux et des cendres. Préférentiellement, la durée de combustion du mélange pyrotechnique est au moins égale à une durée de référence voisine de 50 millisecondes. Avantageusement, chacune des deux extrémités du tube retard est obturée par un opercule claquable.

Selon un mode préféré de réalisation de l'invention,
**i)** le corps présente une paroi latérale dans laquelle est fixée ladite cloison étanche,
**ii)** un ensemble de sécurité enserre une partie de la paroi latérale du corps et permet d'éviter que les gaz générés par la combustion du chargement pyrotechnique contenu dans l'une des deux chambres de combustion ne pénètrent par les tuyères de l'autre chambre de combustion et n'allument le chargement pyrotechnique qu'elle contient,
**iii)** un carter, constitué par un couvercle et un capot solidarisés l'un à l'autre, est fixé dans la paroi latérale du corps et forme une chambre de diffusion autour de ladite paroi latérale,
**iv)** le carter comporte des évents d'évacuation des gaz de combustion.

Préférentiellement, le chargement pyrotechnique est constitué soit par une composition pyrotechnique choisie dans le groupe des compositions dites "à double base", c'est-à-dire les compositions à base de nitrocellulose et de nitroglycérine, soit par une composition pyrotechnique composite à base d'un liant organique et d'au moins une charge oxydante.

Selon une première caractéristique de ce mode préféré de réalisation de l'invention, l'ensemble de sécurité est constitué par une bande métallique annulaire, dont les extrémités sont jointes, qui comporte des zones prédécoupées. Avantageusement, l'ensemble de sécurité enserre la paroi latérale du corps de telle façon que les tuyères sont chacune recouvertes par l'une des zones prédécoupées.

Préférentiellement encore, la paroi latérale du corps présente un rétreint périphérique externe compris entre deux épaulements, ce rétreint servant de logement à l'ensemble de sécurité et contenant lesdites tuyères. Ainsi, ce dernier est calé entre deux épaulements et ne peut pas, même en raison d'un choc violent, s'extraire de son logement.

Selon une autre caractéristique de ce mode préféré de réalisation de l'invention, dans chaque chambre de combustion, le chargement pyrotechnique est isolé du corps et de la cloison étanche par une enveloppe cylindrique. Ainsi, l'enveloppe cylindrique protège le chargement pyrotechnique de l'humidité ambiante et d'un contact prolongé avec la paroi latérale du corps ou avec la cloison étanche. Avantageusement, l'enveloppe cylindrique présente une paroi latérale plaquée contre la surface interne de la paroi latérale dudit corps. Les tuyères portées par cette dernière sont alors obturées par la paroi latérale de l'enveloppe cylindrique qui fait office d'opercules claquables.

Un générateur selon l'invention présente donc les deux avantages suivants :
- D'une part, la fabrication ne met en oeuvre qu'un faible nombre de pièces dont l'assemblage peut être facilement automatisé, ce qui permet de réduire très sensiblement les coûts de fabrication.
- D'autre part, ce générateur offre la possibilité de faire varier le volume de gaz généré ou la vitesse de gonflage du coussin, tout en garantissant l'élimination de toute matière pyrotechnique active inutilisée après fonctionnement.

On donne ci-après une description détaillée du mode de réalisation préféré en se référant aux figures 1 à 5.

La figure **1** est une vue en coupe longitudinale d'un générateur selon l'invention.

La figure **2** est une vue en coupe longitudinale du tube retard du générateur représenté à la figure 1.

La figure **3** est une vue selon la coupe III-III du générateur représenté à la figure 1.

La figure **4** est une vue selon la coupe IV-IV du générateur représenté à la figure 1.

La figure **5** est une vue en perspective de l'ensemble de sécurité du générateur selon l'invention.

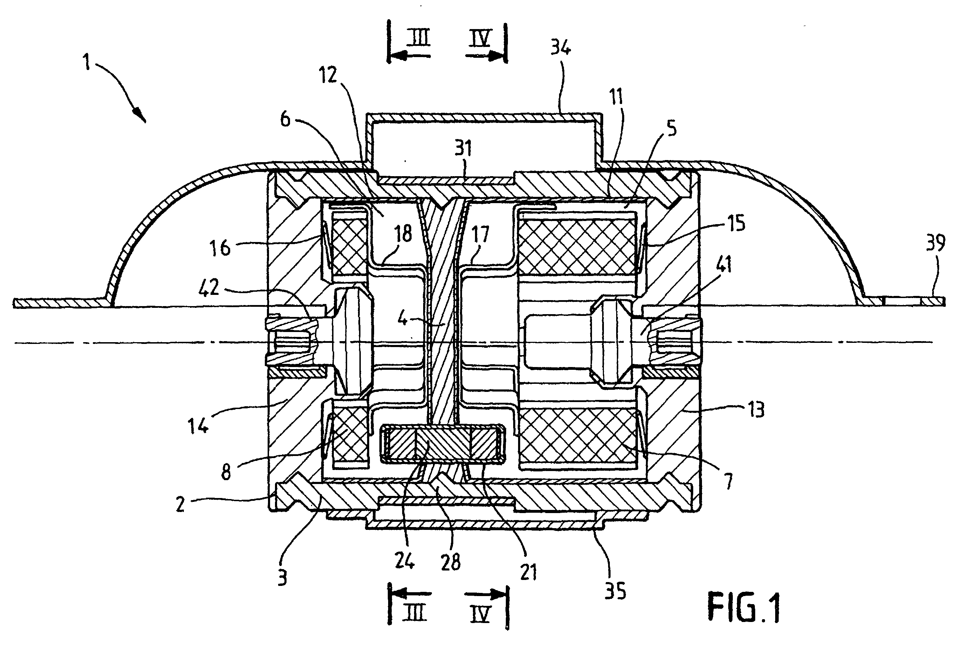

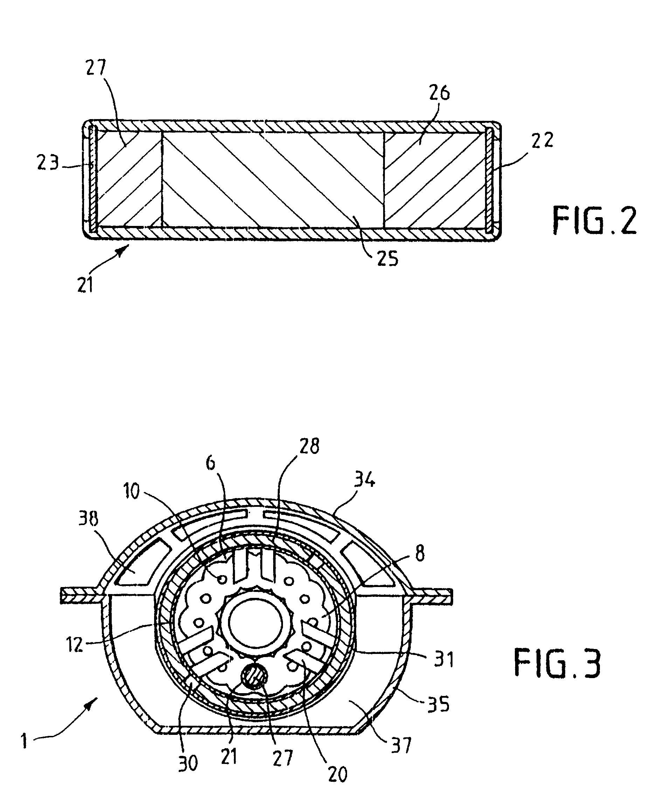

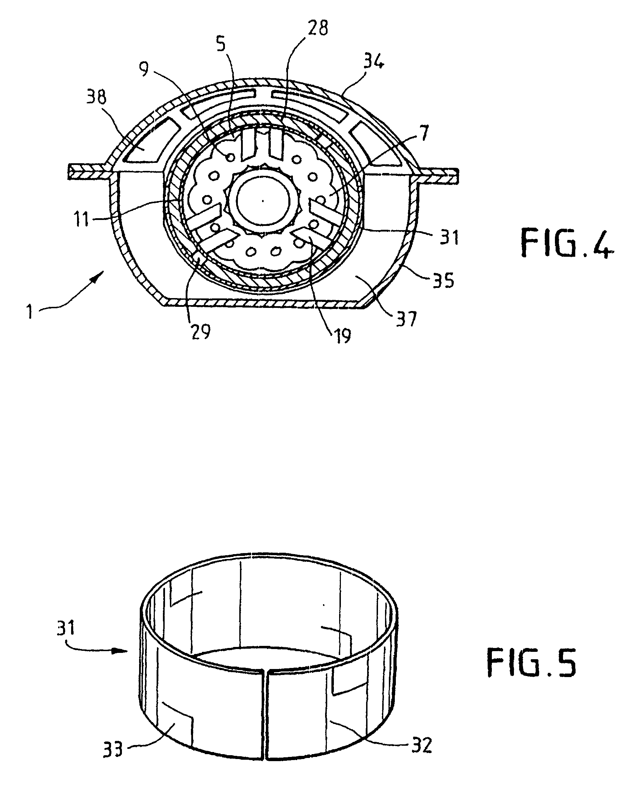

En se reportant aux figures 1 à 4, on observe qu'un générateur pyrotechnique adaptatif de gaz 1 selon l'invention comprend un corps 2 cylindrique monobloc qui présente une paroi latérale 3 munie de deux extrémités ouvertes. Une cloison 4 étanche transversale est sertie dans la paroi latérale 3 et divise ledit corps 2 en une chambre de combustion amont 5 et une chambre de combustion aval 6.

La chambre de combustion amont 5 contient un bloc cylindrique de chargement pyrotechnique 7 perforé par une pluralité de canaux 9 parallèles à l'axe du bloc, celui-ci étant parallèle aux génératrices du corps 2. Le bloc de chargement pyrotechnique 7 est isolé de la paroi latérale 3 et de la cloison 4 étanche transversale par une enveloppe 11 cylindrique en métal fin. Cette dernière présente une extrémité fermée en appui contre la cloison 4 étanche transversale, une paroi latérale plaquée contre la surface interne de la paroi latérale 3 du corps 2 et une extrémité libre collée hermétiquement à une bague de fermeture 13 sertie dans l'extrémité ouverte de la paroi latérale 3. Ladite extrémité fermée de l'enveloppe 11 cylindrique comporte en outre un orifice dont le rôle sera explicité plus loin. Un allumeur 41 électrique, dont la prise est protégée par un shunt, est inséré dans la bague de fermeture 13. Le bloc de chargement pyrotechnique 7 est calé à l'aide d'une ressort hélicoïdal 15 et d'une bague de calage 17. Le ressort 15 est en appui à la fois contre la bague de fermeture 13 et contre une extrémité dudit bloc. L'autre extrémité du bloc vient en butée contre la bague de calage 17 qui est elle-même partiellement collée à l'extrémité fermée de l'enveloppe 11 cylindrique. Avantageusement, la bague de calage 17 a la forme d'une cuvette cylindrique dont l'extrémité ouverte présente des pattes 19 qui enserrent le bloc de chargement pyrotechnique 7.

De façon identique, la chambre de combustion aval 6 contient un bloc de chargement pyrotechnique 8 perforé par une pluralité de canaux 10. Préférentiellement, le bloc logé dans la chambre de combustion aval 6 est moins important que celui logé dans la chambre de combustion amont 5. Le bloc de chargement pyrotechnique 8 est également isolé de la paroi latérale 3 et de la cloison 4 étanche transversale par une enveloppe 12 cylindrique dont l'extrémité libre est collée hermétiquement à une bague de fermeture 14 dans laquelle est inséré un allumeur 42 électrique, ladite bague de fermeture 14 étant sertie dans l'extrémité ouverte de la paroi latérale 3. Le bloc de chargement pyrotechnique 8 est calé, de la même manière, à l'aide d'un ressort hélicoïdal 16 et d'une bague de calage 18, ladite bague de calage 18 ayant avantageusement la forme d'une cuvette cylindrique dont l'extrémité ouverte présente des pattes 20 qui enserrent le bloc de chargement pyrotechnique 8.

Un tube retard 21, qui, d'une part, traverse chacune des deux enveloppes 11,12 cylindriques par l'orifice qu'elle porte sur son extrémité fermée, et qui, d'autre part, est fixé par exemple par soudure dans un trou effectué dans la cloison 4 étanche transversale, présente un axe de révolution parallèle mais décalé par rapport à l'axe du corps 2. Ce tube retard 21 comporte une première et une seconde extrémités logées respectivement dans la chambre de combustion amont 5 et dans la chambre de combustion aval 6, chaque extrémité étant obturée par un opercule claquable 22,23. Le tube retard 21 contient un mélange pyrotechnique 24 comportant une composition pyrotechnique relais 25 intercalée entre deux compositions pyrotechniques 26, 27 de même nature que celle constituant les deux blocs de chargement pyrotechnique 7,8. La composition pyrotechnique relais 25 est constituée par un mélange de zirconium et de chromate de plomb de manière à ce que la vitesse de combustion de ladite composition pyrotechnique relais à l'intérieur du tube retard 21 soit par exemple de l'ordre de 50 millisecondes.

La paroi latérale 3 présente un rétreint 28 périphérique externe de largeur constante qui s'étend de part et d'autre de la cloison 4 étanche transversale. Dans chaque chambre de combustion 5,6, le rétreint 28 comporte des tuyères 29,30 qui sont initialement obturées par la paroi latérale de l'enveloppe 11 ou 12 cylindrique correspondante.

En se référant aux figures 1 et 3 à 5, on observe qu'un ensemble de sécurité 31 est constitué par une bande 32 métallique annulaire, dont les extrémités sont jointes, qui comporte des zones prédécoupées 33. Cette bande 32 enserre le rétreint 28 de la paroi latérale 3 de telle façon que les tuyères 29 situées dans la chambre de combustion amont 5 et les tuyères 30 situées dans la chambre de combustion aval 6 sont chacune recouvertes par l'une des zones prédécoupées 33. Un couvercle 34 et un capot 35, fixés par exemple par collage sur les parties non rétreintes de la surface externe de la paroi latérale 3 du corps 2, sont solidarisés l'un à l'autre de manière étanche au moyen d'un plan de joint parallèle à l'axe du corps 2, et constituent une chambre de diffusion 37 autour du rétreint 28. Le couvercle 34 est muni d'évents 38 d'évacuation des gaz de combustion et présente un rebord 39 qui est parallèle au plan de joint et sur lequel est riveté un coussin de protection non représenté sur les figures.

Un tel générateur 1, couplé à un boîtier électronique de commande à fonctions multiples, permet les schémas de fonctionnement suivants. Selon les circonstances de l'accident, le boîtier électronique de commande est amenée à ne déclencher qu'un seul des deux allumeurs 41,42 au choix, ou bien, si nécessaire, à déclencher les deux allumeurs 41,42 simultanément ou successivement.

Dans le premier cas, l'allumeur qui est choisi est celui dont le chargement pyrotechnique qui lui est associé va générer le volume de gaz le mieux adapté à la situation. A titre d'exemple, si l'allumeur 41 de la chambre de combustion amont 5 est activé, les gaz de combustion qui sont générés viennent au contact du bloc de chargement pyrotechnique 7, entraînant ainsi l'allumage dudit bloc. Lorsque la pression atteint la valeur de rupture de l'opercule claquable 22 qui obture l'extrémité du tube retard 21 située dans la chambre de combustion amont 5, le mélange pyrotechnique 24 est allumé et, au terme d'approximativement 50 millisecondes, le mélange pyrotechnique 24 va initier, après la rupture de l'opercule claquable 23, le bloc de chargement pyrotechnique 8 non utile logé dans la chambre de combustion aval 6. Parallèlement à cela, et avant que le mélange pyrotechnique ne vienne provoquer l'allumage du chargement pyrotechnique 8 non utile, les gaz générés par la combustion du bloc de chargement pyrotechnique 7 entraînent la rupture de l'enveloppe 11 cylindrique au voisinage des tuyères 29 et exercent alors une pression sur les zones prédécoupées 33 qui recouvrent lesdites tuyères 29, ce qui provoque une pliure de celles-ci dans le sens du flux de gaz. Ces gaz pénètrent ensuite dans la chambre de diffusion 37 qui entoure le rétreint 28 pour finalement s'échapper par les évents 38 d'évacuation des gaz de combustion et gonfler le coussin de protection. La bande 32 métallique annulaire, dont certaines zones prédécoupées recouvrent les tuyères 30, permet alors d'éviter que les gaz chauds qui sont générés par le bloc de chargement pyrotechnique 7 ne viennent rompre l'enveloppe 12 cylindrique de la chambre de combustion aval 6 au voisinage des tuyères 30 et par conséquence provoquer l'allumage du chargement pyrotechnique 8 non utile. A la suite du gonflage partiel du coussin de protection qui assure une protection adaptée à la sévérité de l'accident, le bloc de chargement pyrotechnique 8, qui est initié à l'aide du tube retard 21, brûle et génère des gaz de combustion qui s'échappent, d'une part, par les tuyères 30 de la chambre de combustion aval 6 lorsque, sous l'effet d'une augmentation de la pression dans la chambre de combustion 6, l'enveloppe 12 cylindrique se rompt au voisinage desdites tuyères 30 et les zones prédécoupées 33 les recouvrant se plient dans le sens du flux de gaz, et d'autre part, par le tube retard 21 qui est alors vide et finalement par les tuyères 29 de la chambre de combustion amont 5. Ces gaz pénètrent ensuite dans la chambre de diffusion 37 pour, en définitive, s'échapper par les évents 38 et se déverser dans le coussin de protection de façon non agressive. Le fonctionnement est similaire lorsque le boîtier électronique de commande déclenche l'allumeur 42 logé dans la chambre de combustion aval 6 au lieu de l'allumeur 41 logé dans la chambre de combustion amont 5.

Dans le second cas, c'est-à-dire dans le cas où le coussin doit être totalement gonflé pour assurer une protection efficace, chaque chargement pyrotechnique 7,8 est initié par l'allumeur 41,42 qui lui est associé. Le tube retard 21 est alors allumé par ses deux extrémités et les gaz qui sont générés par la combustion du mélange pyrotechnique 24 ne représentent qu'une partie quasiment négligeable de la totalité des gaz qui s'échappent du générateur 1 à la suite de la rupture des deux enveloppes 11, 12 cylindriques au voisinage des tuyères 29,30 et de la pliure de l'ensemble des zones prédécoupées 33. La totalité des gaz traversent alors les évents 38 d'évacuation des gaz de combustion pour finalement gonfler le coussin de protection.

## Revendications

1. Générateur pyrotechnique adaptatif de gaz (1) destiné à gonfler un coussin de protection utilisable en sécurité automobile comprenant un corps (2) contenant au moins deux chambres de combustion (5, 6) séparées l'une de l'autre par une cloison (4) étanche, chacune de ces deux chambres de combustion (5, 6) possédant au moins un chargement pyrotechnique (7, 8), un système d'allumage indépendant (41, 42) et étant munie de tuyères d'éjection des gaz (29, 30) initialement obturées, **caractérisé en ce que** le générateur comporte un dispositif de neutralisation apte, après le gonflage opérationnel du coussin de protection du fait de l'activation de l'une des deux chambres de combustion, à provoquer l'initiation en combustion du chargement pyrotechnique non utilisé contenu dans l'autre chambre de combustion, ce dispositif de neutralisation comportant un moyen de mise en communication des deux chambres de combustion et un moyen d'initiation du chargement pyrotechnique non utilisé, ces deux moyens étant déclenchés par la mise à feu du chargement pyrotechnique contenu dans la chambre de combustion activée.

2. Générateur selon la revendication 1, **caractérisé en ce que** le moyen de mise en communication est constitué par au moins un tube retard (21) muni de deux extrémités fermées et qui est fixé dans la cloison (4) étanche de manière à ce que chacune des deux chambres de combustion (5,6) contienne l'une de ses deux extrémités, et **en ce que** le moyen d'initiation est constitué par un mélange pyrotechnique (24) contenu dans le tube retard (21), la durée de combustion dudit mélange pyrotechnique (24) lorsque le tube retard (21) n'est initié que par l'une de ses deux extrémités étant supérieure à la durée nécessaire au gonflage opérationnel du coussin de protection.

3. Générateur selon la revendication 2, **caractérisé en ce que** le mélange pyrotechnique (24) comporte une composition pyrotechnique relais (25) essentiellement constituée d'un mélange oxydo-réducteur.

4. Générateur selon l'une quelconque des revendications 2 ou 3, **caractérisé en ce que** le mélange pyrotechnique (24) ne génère essentiellement que des produits gazeux et des cendres.

5. Générateur selon l'une quelconque des revendications 2 à 4, **caractérisé en ce que** la durée de combustion du mélange pyrotechnique (24) est au moins égale à une durée de référence voisine de 50 millisecondes.

6. Générateur selon la revendication 2, **caractérisé en ce que** chaque extrémité du tube retard (21) est obturée par un opercule claquable (22,23).

7. Générateur selon la revendication 2, **caractérisé en ce que**,
**i)** le corps (2) présente une paroi latérale (3) dans laquelle est fixée ladite cloison (4) étanche,
**ii)** un ensemble de sécurité (31) enserre une partie de la paroi latérale (3) du corps (2) et permet d'éviter que les gaz générés par la combustion du chargement pyrotechnique contenu dans l'une des deux chambres de combustion ne pénètrent par les tuyères de l'autre chambre de combustion et n'allument le chargement pyrotechnique qu'elle contient,
**iii)** un carter, constitué par un couvercle (34) et un capot (35) solidarisés l'un à l'autre, est fixé dans la paroi latérale (3) du corps (2) et forme une chambre de diffusion (37) autour de ladite paroi latérale (3),
**iv)** le carter comporte des évents (38) d'évacuation des gaz de combustion.

8. Générateur selon la revendication 7, **caractérisé en ce que** l'ensemble de sécurité (31) est constitué par une bande (32) métallique annulaire, dont les extrémités sont jointes, qui comporte des zones prédécoupées (33).

9. Générateur selon la revendication 8, **caractérisé en ce que** l'ensemble de sécurité (31) enserre la paroi latérale (3) du corps (2) de telle façon que les tuyères (29,30) sont chacune recouvertes par l'une des zones prédécoupées (33).

10. Générateur selon l'une quelconque des revendications 8 ou 9, **caractérisé en ce que** la paroi latérale (3) présente un rétreint (28) périphérique externe compris entre deux épaulements, ce rétreint (28) servant de logement à l'ensemble de sécurité (31) et contenant les tuyères (29,30).

## Patentansprüche

1. Anpassungsfähiger pyrotechnischer Gasgenerator (1) zum Aufblasen eines in der Kraftfahrzeugsicherheit verwendbaren Airbags, mit einem Körper (2), der mindestens zwei Brennkammern (5, 6) enthält, die voneinander durch eine dichte Trennwand (4) getrennt sind, wobei jede dieser beiden Brennkammern (5, 6) mindestens eine pyrotechnische Ladung (7, 8) und ein unabhängiges Zündsystem (41, 42) besitzt und mit Gasausstoßdüsen (29, 30) versehen ist, die ursprünglich verschlossen sind, **dadurch gekennzeichnet, daß** der Generator eine Neutralisierungsvorrichtung aufweist, die in der Lage ist, nach dem Einsatz-Aufblasen des Airbags aufgrund der Aktivierung einer der beiden Brennkammern, die Brenninitiierung der nicht verwendeten, in der anderen Brennkammer enthaltenen pyrotechnischen Ladung zu bewirken, wobei diese Neutralisierungsvorrichtung eine Einrichtung, um die beiden Brennkammern in Verbindung zu setzen, und eine Einrichtung zur Initiierung der nicht verwendeten pyrotechnischen Ladung aufweist, wobei diese beiden Einrichtungen durch die Zündung der in der aktivierten Brennkammer enthaltenen pyrotechnischen Ladung ausgelöst werden.

2. Generator nach Anspruch 1, **dadurch gekennzeichnet, daß** die Einrichtung zur Herstellung der Verbindung aus mindestens einem Verzögerungsrohr (21) besteht, das mit zwei geschlossenen Enden versehen und in der dichten Trennwand (4) so befestigt ist, daß jede der beiden Brennkammern (5, 6) eines seiner beiden Enden enthält, und daß die Initiierungseinrichtung aus einer pyrotechnischen Mischung (24) besteht, die im Verzögerungsrohr (21) enthalten ist, wobei die Brenndauer der pyrotechnischen Mischung (24), wenn das Verzögerungsrohr (21) nur von einem seiner beiden Enden initiiert wird, länger ist als die Dauer, die zum Einsatz-Aufblasen des Airbags notwendig ist.

3. Generator nach Anspruch 2, **dadurch gekennzeichnet, daß** die pyrotechnische Mischung (24) eine pyrotechnische Verzögerungszusammensetzung (25) aufweist, die hauptsächlich aus einer Oxidations-Reduktions-Mischung besteht.

4. Generator nach einem der Ansprüche 2 oder 3, **dadurch gekennzeichnet, daß** die pyrotechnische Mischung (24) hauptsächlich nur gasförmige Produkte und Asche erzeugt.

5. Generator nach einem der Ansprüche 2 bis 4, **dadurch gekennzeichnet, daß** die Brenndauer der pyrotechnischen Mischung (24) mindestens gleich einer Bezugsdauer nahe 50 Millisekunden ist.

6. Generator nach Anspruch 2, **dadurch gekennzeichnet, daß** jedes Ende des Verzögerungsrohrs (21) von einer durchschlagbaren Abdeckfolie (22, 23) verschlossen wird.

7. Generator nach Anspruch 2, **dadurch gekennzeichnet, daß**
i) der Körper (2) eine Seitenwand (3) aufweist, in der die dichte Trennwand (4) befestigt ist,
ii) eine Sicherheitseinheit (31) einen Teil der Seitenwand (3) des Körpers (2) umklammert und es ermöglicht zu vermeiden, daß die von der Verbrennung der in einer der beiden Kammern enthaltenen pyrotechnischen Ladung erzeugten Gase durch die Düsen der anderen Brennkammer eindringen und die in ihr enthaltene pyrotechnische Ladung zünden,
iii) ein Gehäuse, das aus einem Deckel (34) und einer Kappe (35) besteht, die fest miteinander verbunden sind, in der Seitenwand (3) des Körpers (2) befestigt ist und eine Diffusionskammer (37) um die Seitenwand (3) herum bildet,
iv) das Gehäuse Abzugsöffnungen (38) zur Evakuierung der Brenngase aufweist.

8. Generator nach Anspruch 7, **dadurch gekennzeichnet, daß** die Sicherheitseinheit (31) aus einem ringförmigen Metallband (32) besteht, dessen Enden verbunden sind, das vorausgeschnittene Zonen (33) aufweist.

9. Generator nach Anspruch 8, **dadurch gekennzeichnet, daß** die Sicherheitseinheit (31) die Seitenwand (3) des Körpers (2) so umklammert, daß die Düsen (29, 30) je von einer der vorausgeschnittenen Zonen (33) bedeckt sind.

10. Generator nach einem der Ansprüche 8 oder 9, **dadurch gekennzeichnet, daß** die Seitenwand (3) eine äußere Umfangseinschnürung (28) zwischen zwei Schultern aufweist, wobei diese Einschnürung (28) als Sitz für die Sicherheitseinheit (31) dient und die Düsen (29, 30) enthält.

## Claims

1. Adaptive pyrotechnic gas generator (1) designed to inflate a protective cushion which can be used in automobile safety comprising a body (2) containing at least two combustion chambers (5, 6) which are separated from one another by a sealed partition (4), each of these two combustion chambers (5, 6) having at least one pyrotechnic charge (7, 8), an independent ignition system (41, 42) and being provided with gas ejection pipes (29, 30) which are initially closed, **characterised in that** the generator comprises a neutralisation device which, after the protective cushion has been inflated operationally owing to the activation of one of the two combustion chambers, can give rise to initiation of combustion of the pyrotechnic charge not used contained in the other combustion chamber, this neutralisation device comprising a means for putting the two combustion chambers into communication and a means for initiation of the pyrotechnic charge not used, these two means being triggered by firing of the pyrotechnic charge contained in the combustion chamber activated.

2. Generator according to claim 1, **characterised in that** the means for putting into communication consists of at least one delay tube (21) which is provided with two closed ends and is secured in the sealed partition (4) such that each of the two combustion chambers (5, 6) contains one of its two ends, and **in that** the means for initiation consists of a pyrotechnic mixture (24) contained in the delay tube (21), the duration of combustion of the said pyrotechnic mixture (24) being greater than the duration necessary for operational inflation of the protective cushion, when the delay tube (21) is initiated only by one of its two ends.

3. Generator according to claim 2, **characterised in that** the pyrotechnic mixture (24) comprises a relay pyrotechnic composition (25) which substantially consists of an oxidoreduction mixture.

4. Generator according to claim 2 or claim 3, **characterised in that** the pyrotechnic mixture (24) generates substantially only gaseous products and ash.

5. Generator according to any one of claims 2 to 4, **characterised in that** the duration of combustion of the pyrotechnic mixture (24) is at least equal to a reference duration close to 50 milliseconds.

6. Generator according to claim 2, **characterised in that** each end of the delay tube (21) is closed by a cap (22, 23) which can be punctured.

7. Generator according to claim 2, **characterised in that**:
i) the body (2) has a lateral wall (3) in which the said sealed partition (4) is secured;
ii) a safety assembly (31) encloses a part of the lateral wall (3) of the body (2) and makes it possible to prevent the gases generated by the combustion of the pyrotechnic charge contained in one of the two combustion chambers from penetrating via the pipes of the other combustion chamber and igniting the pyrotechnic charge which it contains;
iii) a housing consisting of a cover (34) and a casing (35) which are rendered integral with one another is secured in the lateral wall (3) of the body (2) and forms a diffusion chamber (37) around the said lateral wall (3) ; and
iv) the housing comprises discharge vents (38) for the combustion gases.

8. Generator according to claim 7, **characterised in that** the safety assembly (31) consists of an annular metal strip (32), the ends of which are joined, which comprises pre-cut areas (33).

9. Generator according to claim 8, **characterised in that** the safety assembly (31) encloses the lateral wall (3) of the body (2) such that the pipes (29, 30) are each covered by one of the pre-cut areas (33).

10. Generator according to claim 8 or claim 9, **characterised in that** the lateral wall (3) has an outer peripheral necking (28) contained between two shoulders, this necking (28) acting as a receptacle for the safety assembly (31) and containing the pipes (29, 30).
